# EUROPÄISCHE PATENTANMELDUNG

(11) **EP 0 903 530 A1**
(43) Veröffentlichungstag der Anmeldung: **24.03.1999**
(21) Anmeldenummer: 98114260.7
(22) Anmeldetag: 30.07.1998
(51) Int. Cl.: F16L 55/165, F16L 55/162

(54) **Aushärtbares Schlauchstück für die Rohrsanierung**

(30) Priorität: 19.09.1997 DE 29716876 U
(71) Anmelder: BKP Berolina Polyester GmbH & Co. KG, 13591 Berlin (DE)
(72) Erfinder: Odenwald, Ralf, 16727 Velten (DE)
(74) Vertreter: KOHLER SCHMID + PARTNER

(57) **Zusammenfassung**

Um ein aushärtbares Schlauchstück (2) zum Auskleiden eines zu sanierenden Abschnitts eines Rohrs (4) für möglichst viele verschiedene Rohrdurchmesser schnell und einfach einsetzen zu können, ist das aushärtbare Schlauchstück (2) eine zusammengerollte, sich an ihren beiden Enden (1a, 1b) überlappende, aushärtbares Material enthaltende Bahn (1), deren Breite der Länge des zu sanierenden Rohrabschnitts und deren Länge mindestens dem Innenumfang des zu sanierenden Rohrabschnitts entspricht. Vorzugsweise ist die Bahn (1) entsprechend dem Innenumfang des zu sanierenden Rohrabschnitts von einer Längeren Vorratsbahn abgeschnitten.

## Beschreibung

Die Erfindung betrifft eine Vorratsbahn, die aushärtbares Material enthält.

Zum Sanieren eines Abschnitts eines Rohrs wird ein aushärtbarer Schlauch in Anlage an die Innenwandung des zu sanierenden Rohrabschnitts gebracht und dann Zu einem Neurohr ausgehärtet.

Wenn nur eine oder wenige schadhafte Stellen in einem zu sanierenden Rohrabschnitt vorliegen und eine Auskleidung des kompletten Rohres folglich zu teuer kommt, werden aushärtbare Schlauchstücke eingesetzt. Diese aushärtbaren Schlauchstücke brauchen keine in sich geschlossenen Schläuche zu sein, sondern es werden auch aushärtbares Material enthaltende Schlauchbahnen eingesetzt, deren Breite der Länge des zu sanierenden Rohrabschnitts und deren Länge dem Innenumfang des zu sanierenden Rohrabschnitts entsprechen und die vor Ort unter Überlappung ihrer beiden Enden zu einem Schlauchstück geschlossen werden.

Bekannte Schlauchbahnen sind in der Regel ca. 50 cm breit und können sowohl kalt- als auch lichthärtend ausgebildet sein. Je nach Anwendungsfall sind sie mit einer dem Durchmesser des zu sanierenden Rohrabschnitts entsprechenden Länge in Einzelfertigung hergestellt und werden in gefaltetem Zustand bevorratet und an den Anwendungsort geliefert.

Allerdings muß bei diesen bekannten, in Einzelfertigung hergestellten aushärtbaren Schlauchbahnen für verschiedene Durchmesser jeweils entsprechendes Material bevorratet werden. Damit bei Bedarf die benötigte Schlauchgröße nicht gerade ausgegangen ist, muß folglich für die notwendige Flexibilität am Markt Kapital in Form von Rohstoff gebunden werden. Außerdem ist der Verpackungsaufwand bei den einzelgefertigten Schlauchbahnen sehr hoch.

Es ist daher Aufgabe der vorliegenden Erfindung, eine einfache Möglichkeit zu schaffen, Schlauchbahnen für möglichst viele unterschiedliche Rohrdurchmesser bereitzustellen und zu bevorraten.

Diese Aufgabe wird erfindungsgemäß gelöst durch eine aushärtbares Material enthaltende Vorratsbahn, von der ein oder mehrere jeweils einen zu sanierenden Abschnitt eines Rohrs auskleidende, aushärtbare Schlauchbahnen mit jeweils einer Länge abschneidbar sind, die mindestens dem jeweiligen Innenumfang des zu sanierenden Rohrabschnitts entspricht.

Der Benutzer braucht nun, da die Breite der Vorratsbahn bereits der gewünschten späteren Länge des Schlauchstücks entspricht, von der Vorratsbahn lediglich eine Schlauchbahn mit der dem gewünschten Rohrdurchmesser entsprechenden Länge abzuschneiden. Dadurch ist der Benutzer praktisch durchmesserunabhängig und muß keine Sondergrößen bevorraten. Entsprechend der Ausgangslänge der Vorratsbahn können so viele kürzere Schlauchbahnen abgeschnitten werden.

Bei bevorzugten Ausführungsformen der Erfindung ist die Vorratsbahn zusammenrollbar und kann daher, insbesondere am Einsatzort, zur Verringerung ihres Volumens sehr eng zusammengerollt als Vorratsrolle aufbewahrt werden.

Vorzugsweise ist die Vorratsbahn auf einen Wicklungskern aufgewickelt, der beidseitig durch Scheiben begrenzt ist. Von diesem Wicklungskern kann eine Schlauchbahn mit der dem gewünschten Rohrdurchmesser entsprechenden Länge abgezogen und dann abgeschnitten werden.

Für die meisten Anwendungsfälle ist es ausreichend, wenn die Breite der Vorratsbahn bzw. der Schlauchbahn bis zu etwa 100 cm, vorzugsweise etwa 40 bis 50 cm, und die Länge der noch nicht abgeschnittenen Vorratsbahn etwa 20 m, vorzugsweise bis zu etwa 10 bis 17 m beträgt. Selbstverständlich kann die Vorratsbahn je nach Anwendungsfall auch andere, größere oder kleinere, Abmessungen aufweisen.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: in perspektivischer Draufsicht eine biegsame Vorratsbahn, die mit aushärtbarem Material getränkt ist;
- Fig. 2: eine von der Vorratsbahn der Fig. 1 abgeschnittene, zu einem Schlauchstück zusammengerollte Schlauchbahn; und
- Fig. 3: eine Seitenansicht in ein Rohr, das durch Auskleiden und Aushärten des Schlauchstücks der Fig. 2 auf einem Abschnitt saniert ist.

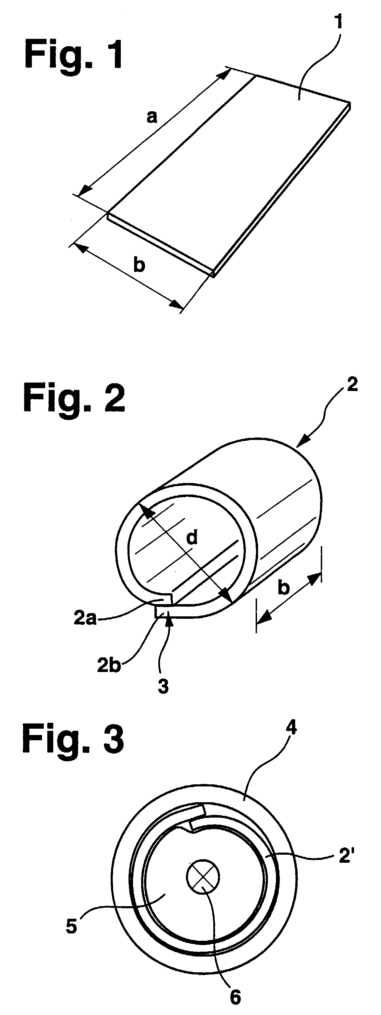

In Fig. 1 ist mit **1** eine biegsame Vorratsbahn bezeichnet, die mit einem z.B. durch Licht aushärtbaren Harz getränkt ist. Die Länge a der Vorratsbahn 1 beträgt vorzugsweise etwa 13 m und ihre Breite b vorzugsweise etwa 45 bis 50 cm.

Von dieser Vorratsbahn 1 wird eine kürzere Schlauchbahn abgeschnitten und zu einem aushärtbaren Schlauchstück 2 zusammengerollt (Fig. 2). Dabei ist die Länge der Schlauchbahn so gewählt, daß der Außendurchmesser d des zusammengerollten Schlauchstücks 2 dem Innenumfang des zu sanierenden Rohrabschnitts entspricht und daß eine ausreichende Überlappung der Schlauchenden **2a**, **2b** sichergestellt ist. In diesem Überlappungsbereich **3** kann sich ein, insbesondere ebenfalls aushärtbares, Klebemittel befinden.

Dieses Schlauchstück 2 wird in Anlage an die Innenwandung des zu sanierenden Rohrs **4** gebracht und mit Licht ausgehärtet (Fig. 3). Dazu ist im Innenraum des Schlauchstücks 2 ein Expansionskörper **5** in Form einer mit Druckluft aufblasbaren Blase angeordnet, die das Schlauchstück 2 an das Rohr 4 drückt. Über eine Aushärteeinrichtung **6** (Lampe) im Innern des Expansionskörpers 5 wird das, weiterhin druckbeaufschlagte, Schlauchstück 2 dann zu einem ausgehärteten Schlauchstück **2'** ausgehärtet.

## Patentansprüche

1. Aushärtbares Material enthaltende Vorratsbahn (1), von der ein oder mehrere jeweils einen zu sanierenden Abschnitt eines Rohrs (4) auskleidende, aushärtbare Schlauchbahnen mit jeweils einer Länge abschneidbar sind, die mindestens dem jeweiligen Innenumfang des zu sanierenden Rohrabschnitts entspricht.

2. Vorratsbahn nach Anspruch 1, dadurch gekennzeichnet, daß die Vorratsbahn (1) zusammenrollbar ist.

3. Vorratsbahn nach Anspruch 2, dadurch gekennzeichnet, daß die Vorratsbahn (1) auf einen Wicklungskern aufgewickelt ist.

4. Vorratsbahn nach einem der vorhergehenden Ansprüche, dadurch gekennzeichnet, daß die Breite (b) der Vorratsbahn (1) bis zu etwa 100 cm, vorzugsweise etwa 40 bis 50 cm, beträgt.

5. Vorratsbahn nach einem der vorhergehenden Ansprüche, dadurch gekennzeichnet, daß die Länge (a) der noch nicht abgeschnittenen Vorratsbahn (1) bis zu etwa 20 m, vorzugsweise etwa 10 bis 17 m, beträgt.
